# EUROPEAN PATENT APPLICATION

(11) **EP 0 604 661 A1**
(43) Date of publication of application: **06.07.1994**
(21) Application number: 93914952.2
(22) Date of filing: 02.07.1993
(51) Int. Cl.: G05B 19/405

(54) **CONVERSATIONAL NUMERIC CONTROL APPARATUS**

(30) Priority: 09.07.1992 JP 182157/92
(71) Applicant: FANUC LTD., Minamitsuru-gun, Yamanashi 401-05 (JP)
(72) Inventor: MATSUMURA, Teruyuki, Hachioji-shi, Tokyo 192-03 (JP); DEGUCHI, Yuuji, Fanuc Mansion Harimomi 8-302, Minamitsuru-gun, Yamana-shi 401-05 (JP); SEKI, Masaki, Tokyo 168 (JP)
(74) Representative: Brunner, Michael John
(86) International application number: JP9300919
(87) International publication number: WO9401811

(57) **Abstract**

Shapes of 2 + 1/2 dimensions are combined to generate NC data of a complicated three-dimensional shape. At first, the operator inputs 2 + 1/2 dimensional shapes conversationally by basic shape input means (1). Then, a shape combining means (2) combines the inputted 2 + 1/2 dimensional shapes to create a synthesized machining shape. NC data generating means (3) generates NC data on the basis of the synthesized machining shape thus created.

## Description

### TECHNICAL FIELD

The present invention relates to an interactive type numerical control apparatus, and more specifically, to an interactive type numerical control apparatus for creating NC data based on a two-and-a-half-dimensional configuration.

### BACKGROUND ART

In machine tools such as machining centers and the like, control axes are generally determined such that the axial direction of a tool is designated as a Z-axis and the direction in which a table on which a workpiece is placed is moved is designated as an X-axis or Y-axis. In the above machine tools, there have been known a three-dimensional machining method by which machining is carried out by simultaneously moving the X-, Y- and Z-axes and a two-and-a-half-dimensional machining method by which machining is carried out by simultaneously moving only the X-and Y-axes and then moving the Z-axis after the completion of predetermined machining, as a method of machining a three-dimensional configuration. These three-dimensional machining method and two-and-a-half-dimensional machining method need to create corresponding NC data by a numerical control apparatus or the like.

On the other hand, a three-dimensional configuration to be machined three-dimensionally by the numerical control apparatus or the like is generally created by a basic curve (BC) as an arbitrary curve in a spatial coordinate system and a free curved surface composed of a drive curve (DC). Further, a three-dimensional configuration for the two-and-a-half-dimensional machining is created by fixing the configuration by applying numerical values such as a radius or a height and the like to a predetermined two-and-a-half-dimensional basic configuration (hereinafter, simply referred to as a "basic configuration") as a basic configuration such as a hemi-sphere or the like.

Nevertheless, since the definition of the free curved surface is very complex, a problem arises in that the creation of a desired three-dimensional configuration is very difficult and thus even a skilled operator needs a very long period of time to create the configuration.

Further, since only the basic configuration is available in the two-and-a-half-dimensional machining, a problem arises in that this machining method cannot comply with a complex three-dimensional configuration.

### DISCLOSURE OF THE INVENTION

Taking the above into consideration, an object of the present invention is to provide an interactive type numerical control apparatus by which NC data for complex three-dimensional configuration is created by combining two-and-a-half-dimensional configurations.

To attain the above object, according to the present invention, there is provided an interactive type numerical control apparatus for creating NC data by inputting two-and-a-half-dimensional configurations, which comprises a basic configuration input means for interactively inputting the two-and-a-half-dimensional configurations, a configuration combination means for combining a plurality of the two-and-a-half-dimensional configurations to create a combined machining configuration, and an NC data creation means for creating NC data based on the combined machining configuration.

First, an operator interactively inputs the two-and-a-half-dimensional configurations by the basic configuration input means. Thereafter, the configuration combination means combines a plurality of the input two-and-a-half-dimensional configurations to create a combined machining configuration and the NC data creation means creates NC data based on the created combined machining configuration.

### BRIEF DESCRIPTION OF THE DRAWINGS

Figure 1 is a diagram explaining the principle of the present invention;
Figure 2 is a block diagram showing the arrangement of an interactive type numerical control apparatus;
Figure 3 is a diagram showing an example of a basic configuration selection screen;
Figure 4 is a diagram showing an example of a numerical value input screen for fixing a basic configuration;
Figure 5 is a diagram showing an example of a numerical value input screen for fixing a basic configuration;
Figure 6 is a diagram showing an example of an input screen for combining configurations;
Figure 7 is a perspective view showing a configuration to be machined by created NC data; and
Figure 8 is a flowchart showing a processing sequence embodying the present invention.

### BEST MODE OF CARRYING OUT THE INVENTION

An embodiment of the present invention will be described below with reference to the drawings.

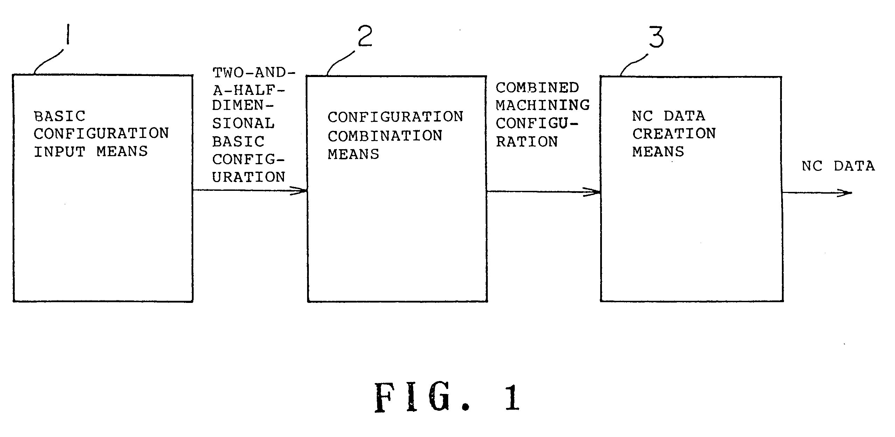

Figure 1 is a diagram explaining the principle of the present invention. The interactive type numerical control apparatus of the present invention is composed of a basic configuration input means 1, configuration combination means 2 and NC data creation means 3.

The basic configuration input means 1 enables an operator to interactively input a two-and-a-half-dimensional configuration; the configuration combination means 2 creates a combined machining configuration by combining a plurality of input two-and-a-half-dimensional configurations; and the NC data creation means 3 creates NC data based on the combined machining configuration created by the configuration combination means 2.

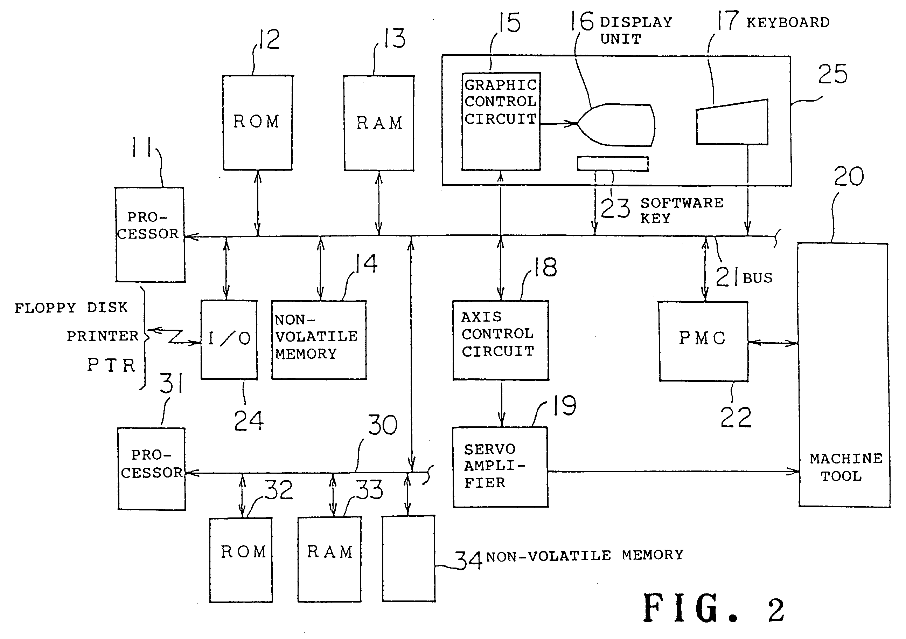

Figure 2 is a block diagram showing the arrangement of the interactive type numerical control apparatus as an embodiment of the present invention.

A processor 11 controls the numerical control apparatus as a whole in accordance with the system program stored in a ROM 12. The ROM 12 is composed of an EPROM or EEPROM. It should be noted that the basic configuration input means 1, configuration combination means 2 and NC data creation means 3 are realized by the processor 11 which executes the system program stored in the ROM 12.

A RAM 13 is composed of an SRAM or the like and stores various kinds of data or I/O signals. A non-volatile memory 14 is composed of a CMOS which stores parameters, amounts of pitch error correction, amounts of tool correction, and the like, which must be maintained operative even after a power supply is cut off, and thus is supplied with a back-up power source such as a battery not shown.

A graphic control circuit 15 converts digital signals into signals for display, and supplied these signals to a display unit 16. A CRT or liquid crystal display unit is used as the display unit 16. When a machining program is interactively created, the display unit 16 displays configurations, machining conditions and the like.

A keyboard 17 is composed of symbolic keys, numeric keys and the like and necessary graphic data and NC data are input through these keys.

On receiving an axis movement command from the processor 11, an axis control circuit 18 outputs the axis command to a servo amplifier 19. When the servo amplifier 19 receives the axis movement command, it drives servo motors of a machine tool 20. These composing elements are interconnected through a bus 21.

When an NC program is executed, a programmable machine controller (PMC) 22 receives a T function signal (tool selection signal) and the like through the bus 21. Then, the signal is processed by a sequence program and a signal is output as an operation command to control the machine tool 20. Further, the PMC 22 receives a state signal from the machine tool 20, sequentially processes the same and transfers a necessary input signal to the processor 11 via the bus 21.

Further, the bus 21 is connected to a software key 23 having a function changed by the system program or the like and to a serial interface 24 through which NC data is transferred to external devices such as a floppy disk, printer, paper tape reader (PTR) and the like. The software key 23 is disposed on a CRT/MDI panel 25 together with the display unit 16 and keyboard 17.

The bus 21 is also connected to an interactive processor 31 with a bus 30 in addition to the processor 11 as a CPU for NC. A ROM 32, RAM 33 and non-volatile memory 34 are connected to the bus 30.

The input screens of interactive data to be displayed on the display unit 16 are stored in the ROM 32. When an NC sentence is created, the moving locus of a tool as a whole and the like are displayed on the input screen of the interactive data as a background animation. Further, a job or data which can be set by the input screen is displayed on the display unit 16 in a menu format. A particular item can be selected from a menu by the software key 23 disposed at the bottom of the display screen in correspondence to the menu. The software key 23 has a meaning which changes depending upon each display screen. The RAM 33 is composed of an SRAM or the like and stores various kinds of interactive data.

Input data is processed by the interactive processor 31 to create a workpiece machining program. The created program data is sequentially displayed as a background animation on the display unit 16 to be used interactively. Further, the workpiece machining program stored in the non-volatile memory 34 as the NC sentence is also executed when the machining simulation of the machine tool 20 is carried out and displayed as a foreground animation.

Next, a case when NC data is created by combining a convex quadrangular prism configuration and convex hemisphere configuration will be described as an example of a procedure from the step of inputting a two-and-a-half-dimensional configuration to the step of creating the NC data.

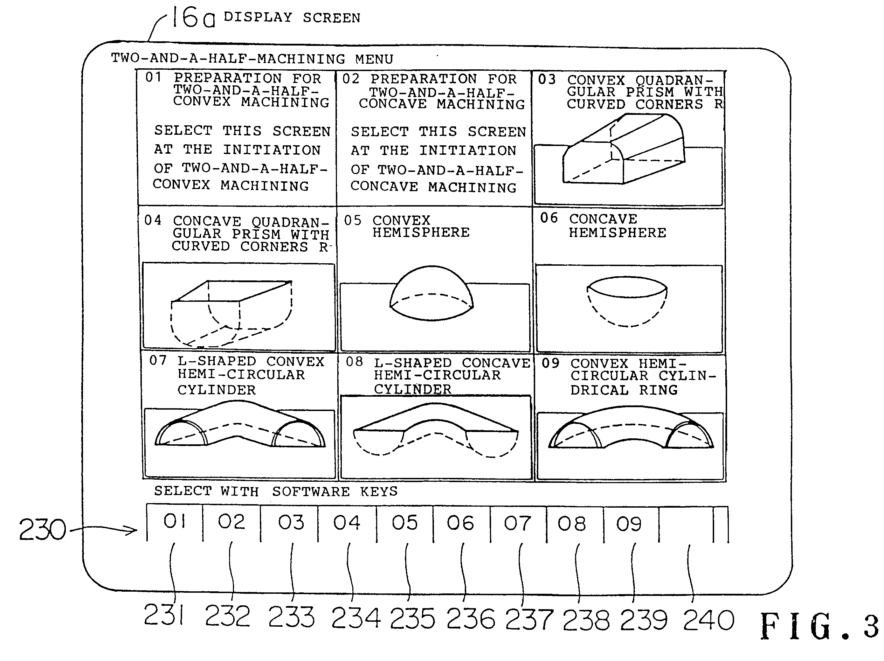

Figure 3 is a diagram showing an example of a basic configuration selection screen, wherein a display screen 16a is an example of the screen to be displayed on the display unit 16 of Figure 2 by the operator carrying out a predetermined operation.

Note that software keys 230 as command keys through which the operator executes various kinds of commands is shown at the bottom of the display screen 16a. The software keys 230 are command keys which can be commanded through the corresponding software key 23 of Figure 2 and composed of 10 command keys 231 - 240 which are changed depending upon a screen to be processed. Figure 3 shows No. 01 command key 231, No. 02 command key 232, ... No. 09 command key 239 and termination command key 240 as the command keys 231 - 240.

The display screen 16a in Figure 3 shows a two-and-a-half-dimensional machining menu in which the respective machining preparations of convex and concave configurations and several kinds of basic configurations as the basic configurations of the two-and-a-half-dimensional configuration are displayed as a menu. A message that "select with the software keys" is displayed at the bottom of the display screen 16a and then the operator commands a desired basic configuration to be machined and the like through the software keys 230.

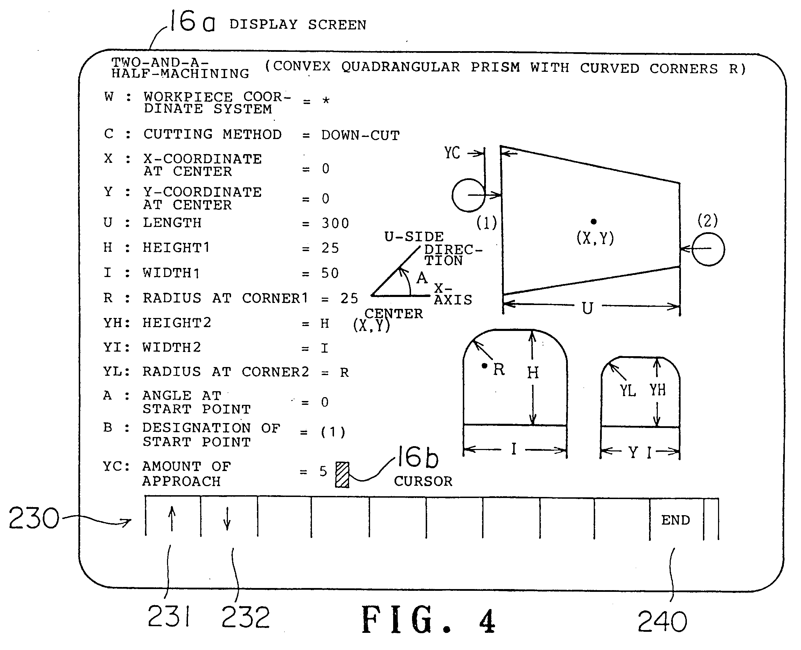

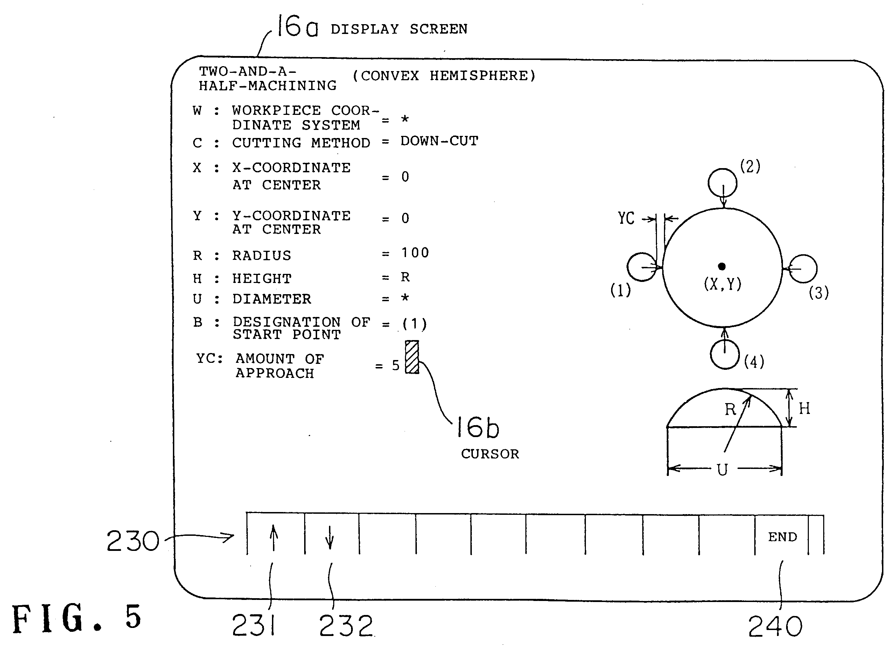

If the operator commands the No. 03 command key 233 with respect to the convex quadrangular prism configuration, the display screen is changed to the one shown in Figure 4, and if the operator commands the No. 05 command key 235 with respect to the convex hemisphere configuration, the display screen changes to the one shown in Figure 5, respectively.

Figures 4 and 5 each show an example of a numerical value input screen for fixing the basic configuration selected in Figure 3. Figure 4 is an input screen for fixing the convex quadrangular prism configuration and Figure 5 is an input screen for fixing the convex hemisphere configuration. It should be noted that an upward movement command key 231 and downward movement command key 232 for moving a cursor 16b for prompting the input of a numerical value and a termination command key 240 are displayed on the software keys 230 at the bottom of the display screen 16a of Figures 4 and 5.

First, Figure 4 displays given items for fixing the convex quadrangular prism configuration such as, for example, a cutting method (C), X-coordinate at center (X), Y-coordinate at center (Y), length (U) and the like on the left side of a screen. Further, Figure 4 graphically displays the convex quadrangular prism configuration on the right side of the prism as well as the meaning of the given items displayed on the left side of the screen by corresponding symbols such as C, X, Y, U and the like in the above example.

The operator commands the movement of the cursor 16b to each item through the upward movement command key 231 and downward movement command key 232 and inputs numerical values through the keyboard 17 of Figure 2. Figure 4 shows that "5" (mm) is input as an amount of approach (YC). Note, when other symbol "H" is designated as in the case of, for example, a height 2 (YH), the same numerical value as that designated in a height 1 (H), that is, "25" (mm) in this case is designated.

After numerical values have been input to necessary items as described above, the termination command key 240 is commanded and the process returns to the two-and-a-half-dimensional machining menu of Figure 3. Note, the system creates the thus fixed convex quadrangular prism configuration in the RAM 13, non-volatile memory 14 or the like as a solid model.

Next, Figure 5 also displays given items such as, for example, a cutting method (C), X-coordinate at center (X), Y-coordinate at center (Y), radius (R) and the like on the left side of a screen. Further, Figure 5 graphically displays the convex hemisphere configuration on the right side of the screen as well as the meaning of the given items displayed on the left side of the screen by corresponding symbols such as C, X, Y, R and the like in the above example.

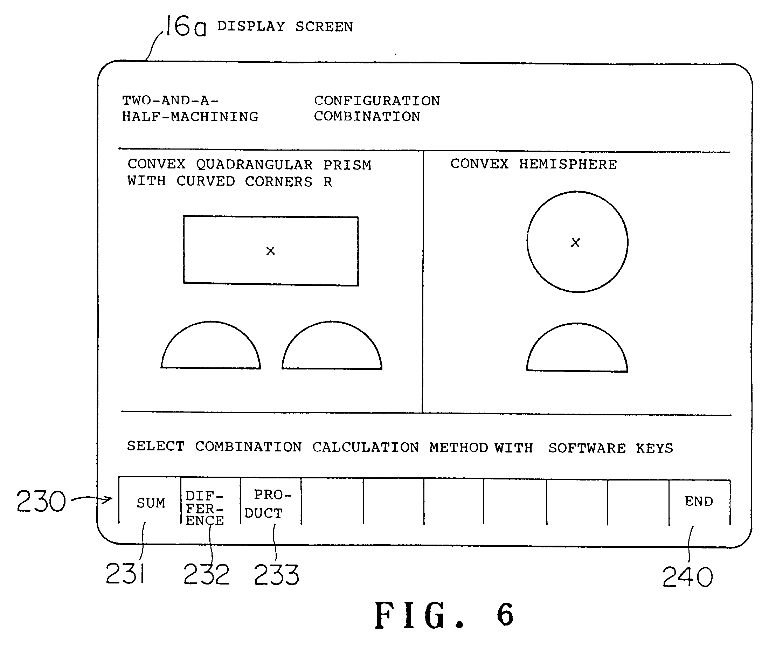

The operator carries out the same operation as that carried out in Figure 4 to input numerical values and the like to the respective items to fix the convex hemisphere configuration. Thereafter, when the termination command key 240 is commanded, the screen changes to the one shown in Figure 6. Note, the system creates the thus fixed convex hemisphere configuration in the RAM 13, non-volatile memory 14 or the like as a solid model.

Figure 6 is a diagram showing an example of an input screen for combining the basic configurations fixed in Figures 4 and 5. It should be noted that a sum command key 231, difference command key 232 and product command key 233 for commanding a combination calculating method and a termination command key 240 are displayed at the bottom of the display screen 16a of Figure 6.

Figure 6 graphically displays the convex quadrangular prism configuration fixed in Figure 4 on the left side of a screen and the convex hemisphere configuration fixed in Figure 5 on the right side thereof. A message that "select a combination calculation method with the software keys" is displayed and then the operator commands a desired combination calculation through any one of the sum command key 231, difference command key 232 and product command key 233. It should be noted that the system combines the convex quadrangular prism configuration and convex hemisphere configuration by a commanded combination calculating method as a solid model and creates a combined machining configuration in the RAM 13, non-volatile memory 14 or the like.

Further, the system creates NC data for machining the two-and-a-half-dimension based on the combined machining configuration created in the RAM 13, non-volatile memory or the like in response to the command from the termination command key 240.

As described above, the system creates the combined machining configuration by interactively inputting the two-and-a-half-dimensional configurations, that is, by selecting the basic configurations from the menu and then fixing them by inputting numerical values and the like so that the NC data for machining the two-and-a-half-dimension is created. Therefore, even a beginner can simply carry out operation and as a result an NC data creating time is shortened. Further, since the created composite machining configuration is the solid model, even if a plurality of basic configurations are combined, NC data can be simply created.

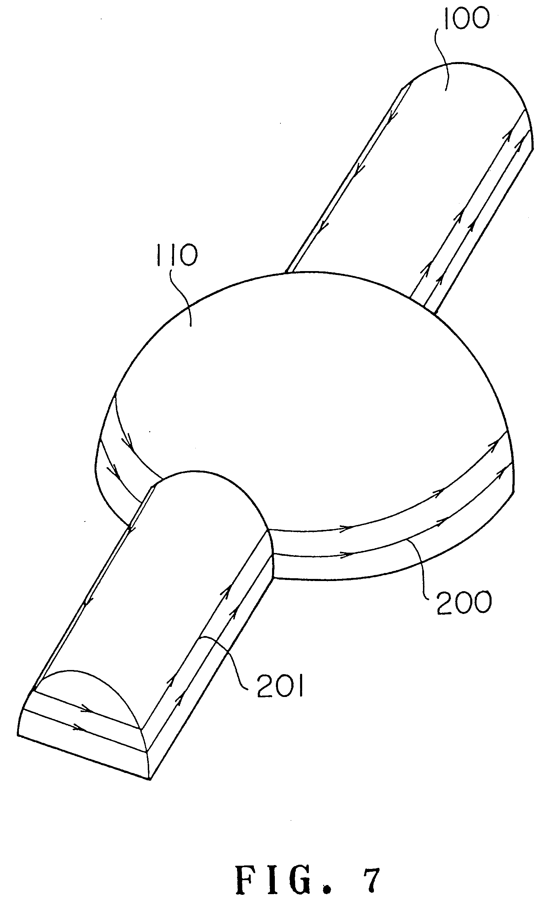

Figure 7 is a perspective view showing a configuration to be machined by the created NC data, wherein a machining configuration 100 is the configuration of the convex quadrangular prism with curved corners R fixed in Figure 4 and a machining configuration 110 is the configuration of the convex hemisphere fixed in Figure 5.

As shown in Figure 7, the overall machining configuration is composed of the combination of the machining configuration 100 and machining configuration 110. Note, an example of the operation (moving direction) of a tool, when the configuration is machined, is as shown by cutter paths 200 and 201.

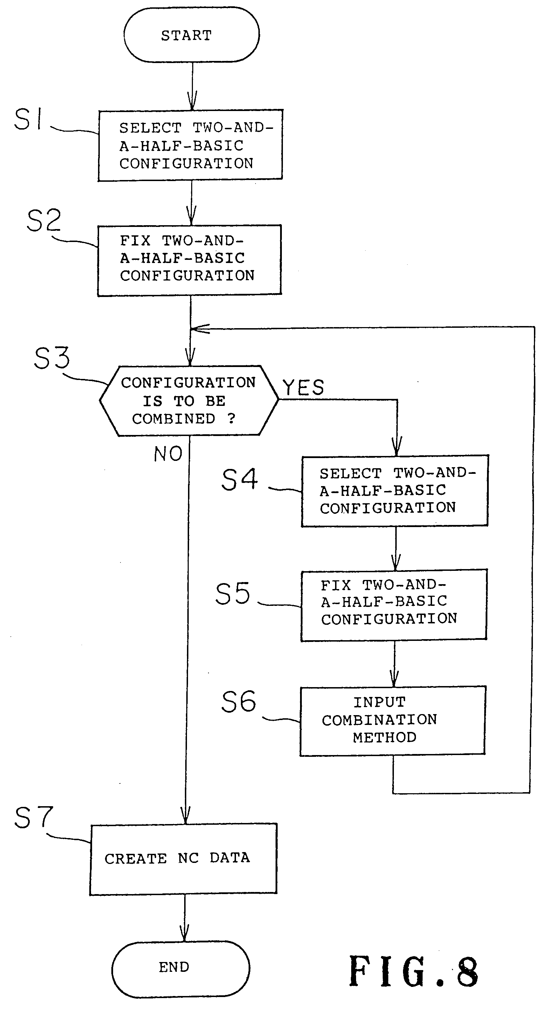

Figure 8 is a flowchart showing a processing sequence embodying the present invention, wherein numerals prefixed with an "S" indicate the numbers of the step. It should be noted that the basic configuration input means 1 executes steps S1, S2, S4 and S5, the configuration combination means 2 executes steps S3 and S6 and the NC data creation means 3 executes step S7, respectively.
[S1] A basic configuration is selected. More specifically, the operator selects the basic configuration to be machined on the basic configuration selection screen shown in Figure 3.
[S2] The basic configuration is fixed. That is, a configuration to be machined is fixed by the operator who inputs numerical values to the unfixed elements of the basic configuration input at step S1 in the numerical value input screen shown in Figure 4 or 5. After the basic configuration has been fixed, the system creates the basic configuration to the RAM 13, non-volatile memory 14 or the like as a solid model.
[S3] Whether the configuration is to be combined or not is asked to the operator. If the configuration is to be combined (YES), the process goes to step S4, and if the configuration is not to be combined (NO), the process goes to step S7.
[S4] A basic configuration is selected in the same way as step S1.
[S5] The basic configuration input at step S4 is fixed in the same way as step S2. After the configuration has been fixed, the system creates the basic configuration in the RAM 13, non-volatile memory 14 or the like as a solid model.
[S6] A combination method is asked and then a combined machining configuration is created. More specifically, any one of the combining methods effected by "sum", "difference" and "product" is asked to the operator, the configurations are combined in accordance with a designated combination method and the combined machining configuration is created in the RAM 13, non-volatile memory 14 or the like as a solid model.
[S7] NC data is created. More specifically, the NC data is created based on the basic configuration fixed at step 2 or the combined machining configuration created at step S6.

Consequently, since the NC data is created after the combined machining configuration has been created by combining the basic configurations which can be easily defined, a complex three-dimensional configuration can be created and machined by the combination of the basic configurations. Further, since the basic configuration for machining the two-and-a-half-dimension is interactively input, even a beginner can simply input it and as a result an NC data creation time can be shortened.

Although the present invention is applied to the interactive type numerical control apparatus in the above description, it can be also applied to an automatic programming apparatus.

Further, although the two-and-a-half-dimensional configuration is combined by selecting basic configurations for machining two-and-a-half-dimension, it may be combined by selecting other two-and-a-half-dimensional configurations by which the two-and-a-half-dimension can be machined, in addition to the basic configuration. With this arrangement, a more complex three-dimensional configuration can be created.

Further, although the selection and the like of basic configurations are commanded through the software key 23 of Figure 2, they may be commanded through the keyboard 17 disposed on the CRT/ MDI panel 25. In the same way, they may be commanded from a pointing device such as a mouse or the like by using a command key referred to as an "icon" which is displayed on the display screen 16a.

As described above, according to the present invention, since after the operator has interactively input two-and-a-half-dimensional configurations by the basic configuration input means, the configuration combination means combines a plurality of the input two-and-a-half-dimensional configurations and creates a combined machining configuration, and the NC data creation means creates NC data based on the thus created combined machining configuration, NC data for a complex three dimensional configuration can be simply created.

Further, since basic configurations for machining a two-and-a-half-dimension are interactively input and combined, even a beginner can simply input them and as a

## Claims

1. An interactive type numerical control apparatus for creating NC data by inputting two-and-a-half-dimensional configurations, comprising:
a basic configuration input means for interactively inputting the two-and-a-half-dimensional configurations;
a configuration combination means for combining a plurality of the two-and-a-half-dimensional configurations to create a combined machining configuration; and
an NC data creation means for creating NC data based on the combined machining configuration.

2. An interactive type numerical control apparatus according to claim 1, wherein said configuration combination means creates the combined machining configuration by calculating the sum, difference or product of the plurality of the two-and-a-half-dimensional configurations.

3. An interactive type numerical control apparatus according to claim 1, wherein said configuration combination means creates the combined machining configuration as a solid model.
